# EUROPEAN PATENT APPLICATION

(11) **EP 3 385 718 A1**
(43) Date of publication of application: **10.10.2018**
(21) Application number: 17164580.7
(22) Date of filing: 03.04.2017
(51) Int. Cl.: G01N 35/00, G01N 35/04

(54) **METHOD OF OPERATING A LABORATORY SAMPLE DISTRIBUTION SYSTEM, LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Mahmudimanesh, Mohammadreza, 64347 Griesheim (DE)
(74) Representative: Patentanwälte Ruff, Wilhelm, Beier, Dauster & Partner mbB

(57) **Abstract**

Method of operating a laboratory sample distribution system (100), wherein the laboratory sample distribution system (100) comprises:
- a transport surface (110),
- a number of sample containers (145) comprising samples (143) to be analyzed,
- a number of sample container carriers (140), wherein a respective sample container (145) is insertable into a sample container carrier (140),
- drive means (120) being adapted to move the sample container carriers (140) on the transport surface (110), and
- a control device (150) being configured to control the movement of the sample container carriers (140) on top of the transport surface (110) by driving the drive means (120) such that the sample container carriers (140) move along corresponding transport paths,
wherein the method comprises the steps:
- assigning priority values to the samples (143), and
- when a sample container (145) comprising a sample (143) is to be inserted into a sample container carrier (140) and no empty sample container carrier (140) is available,
- if a sample container carrier (140) carrying a sample container (145) is available, wherein the carried sample container (145) contains a sample (143) having an assigned priority value lower than the priority value assigned to the sample (143) contained in the sample container (145) to be inserted in a sample container carrier (140), unloading the sample container (145) comprising the sample (143) having the assigned lower priority value from the sample container carrier (140) and inserting the sample container (145) comprising the sample (143) having the assigned higher priority value into the empty sample container carrier (140).

## Description

The invention relates to a method of operating a laboratory sample distribution system, a laboratory sample distribution system and a laboratory automation system.

Laboratory sample distribution systems can be used in order to distribute samples between a plurality of laboratory stations in a laboratory automation system. For example, a two-dimensional laboratory sample distribution system providing high throughput is disclosed in document EP 2 589 968 A1. Electro-magnetic actuators are disposed below a transport surface in order to drive sample container carriers carrying sample containers on the transport surface.

It is an object of the present invention to provide a method of operating a laboratory distribution system, a laboratory distribution system and a laboratory automation system having improved properties regarding the prior art.

This object is solved by a method of operating a laboratory distribution system according to claim 1, a laboratory sample distribution system according to claim 5 and a laboratory automation system according to claim 8.

The invention is related to a method of operating a laboratory sample distribution system.

The laboratory sample distribution system comprises a transport surface. The transport surface may be a transport plane. The transport surface may be completely planar.

The laboratory sample distribution system further comprises a number (e.g. 10 to 100000) of sample containers. A respective sample container is typically designed as a tube made of glass or transparent plastic and typically has an opening at an upper end.

The sample containers typically contain respective samples to be processed and/or analyzed. The sample containers may be used to contain, store and transport the sample to be processed and/or analyzed. The sample may be a blood sample, (blood) serum or plasma sample, a urine sample, separation gel, cruor (blood cells) or a chemical sample. The sample containers may be used to contain, store and transport any kind of biological liquid, for instance.

The laboratory sample distribution system further comprises a number (e.g. 10 to 10000) of sample container carriers. A respective sample container is insertable into a respective sample container carrier. The sample container carriers are typically adapted to carry one sample container.

The transport surface may be adapted to support the sample container carriers, i.e. the sample container carriers can be placed on top of the transport surface. The sample container carriers may be adapted to move and/or slide on top of and over the transport surface.

The laboratory sample distribution system further comprises drive means. The drive means are adapted to move the sample container carriers on the transport surface. The drive means may be adapted to move the sample container carriers simultaneously in two dimensions (x and y) along individual transport paths on the transport surface. The transport path may be a route on the transport surface, wherein a representative sample container carrier moves along the corresponding route on the transport surface.

The laboratory sample distribution system further comprises a control device, e.g. in the form of a personal computer. The control device is adapted to control the movement of the sample container carriers on top of the transport surface by driving the drive means such that the sample container carriers move along corresponding transport paths. The control device may be adapted to control the movement of the sample container carriers such that each sample container carrier moves along an individual transport path. The control device may be adapted to plan individual transport paths for the sample container carriers.

The method comprises the step: assigning priority values to the samples contained in the sample containers and/or to the sample containers. The priority value may be an integer number (e.g. a number in the range 0 to 10). The priority values may be assigned to the sample containers or to the samples, when a sample is inserted into a sample container. The priority values may be assigned to the sample containers or to the samples, when the sample containers comprising the samples are supplied to the laboratory sample distribution system. The priority values may be assigned to the sample containers or to the samples before a sample container is inserted into a sample container carrier. The control device may assign the priority values to the sample containers or to the samples. The priority values assigned to the samples and the priority values assigned to the sample containers may be identical. The priority values assigned to the samples and/or sample tubes may be changed, e.g. automatically or by a laboratory operator, while the samples are processed.

When a sample container comprising a sample is to be inserted into a sample container carrier and no empty sample container carrier(s) is/are available on the transport surface, it is checked, if one or more sample container carriers carrying a sample container is/are available, e.g. is/are placed on the transport surface.

If at least one sample container carrier carrying a sample container is available on the transport surface, it is checked, if the carried sample container contains a sample having an assigned priority value lower than the priority value assigned to the sample contained in the sample container to be inserted in a sample container carrier. If that is the case, the sample container comprising the sample having the assigned lower priority value is unloaded from the sample container carrier and the sample container comprising the sample having the assigned higher priority value is inserted into the emptied sample container carrier.

In other words, when no empty sample container carriers are available and a sample container has to be inserted into a sample container carrier, it is checked, if sample container carriers carrying samples having a lower priority are available. If that is the case, one of those sample container carriers is unloaded and thus made available for the sample having the higher priority.

According to an embodiment, the priority value of a respective sample is determined and then assigned based on a maximum turn-around-time assigned to the sample. The maximum turn-around-time may be predefined. The maximum turn-around-time may be defined by an operator of the laboratory automation system. The maximum turn-around-time may e.g. range from 1 hour to 4 hours. The maximum turn-around-time may be sample-type-specific and/or may depend on the necessary analyses. The maximum turn-around-time assigned to the sample may be an elapsed turn-around-time or an expected/predetermined turn-around-time.

According to an embodiment, the priority value of a respective sample is determined based on a number (e.g. 1 to 1000) of laboratory stations needed for the analysis of the sample. The number of laboratory stations needed for the analysis of the sample may be predefined. The number of laboratory stations needed for the analysis of the sample may be defined by an operator of the laboratory automation system. The number of laboratory stations needed for the analysis of the sample may be sample-type-specific and/or may depend on the necessary analyses.

According to an embodiment, the priority value of a respective sample is determined based on an elapsed processing time of the sample. The elapsed processing time may depend on the number of laboratory stations needed for the analysis of the sample or may depend on the necessary analyses.

According to an embodiment, the priority value of a respective sample is determined based on a static priority assigned to the sample contained in the sample container. The static priority may identify an emergency sample and/or a so called STAT (latin for "statim", i.e. at once, immediately) sample. If the static priority indicates an emergency sample (and/or a STAT sample), the highest available priority value is assigned to the corresponding sample. This allows prioritizing the processing of emergency and/or of STAT samples.

According to an embodiment, if the static priority indicates an emergency sample, the highest available priority value is assigned to the emergency sample.

According to an embodiment, when a sample container comprising a sample is to be inserted into a sample container carrier and an empty sample container carrier is available, the following steps may be performed. A first duration needed to move the empty sample container carrier to an insertion position on the transport surface is determined, wherein sample containers are inserted into sample container carriers at the insertion position. One or more insertion positions may be available. A second duration needed to provide an emptied sample container carrier (sample container carrier to be emptied) currently carrying a sample container at the insertion position is determined, wherein the carried sample container contains a sample having an assigned priority value lower than the priority value assigned to the sample contained in the sample container to be inserted in a sample container carrier. If the second duration is shorter than the first duration, the sample container comprising the sample having the assigned lower priority value from the sample container carrier is unloaded. The emptied sample container carrier is moved to the insertion position, wherein the steps of unloading and moving the sample container carrier may be performed in an arbitrary order. The sample container comprising the sample having the assigned higher priority value is then inserted into the emptied sample container carrier. If the second duration is longer than the first duration, the empty sample container carrier is moved to the insertion position and the sample container comprising the sample having the assigned higher priority value is inserted into the empty sample container carrier.

The laboratory sample distribution system comprises a transport surface, a number of sample containers comprising samples to be analyzed, a number of sample container carriers, wherein a respective sample container is insertable into a sample container carrier, drive means being adapted to move the sample container carriers on the transport surface, and a control device being configured to control the movement of the sample container carriers on top of the transport surface by driving the drive means such that the sample container carriers move along corresponding transport paths. The control device is configured to perform the method as explained above.

The laboratory sample distribution system may comprise a handling device being adapted to handle sample containers and/or sample container carriers. A sample container to be supplied to the laboratory sample distribution system may be placed inside a handover area. The handling device may be adapted to grip sample containers placed inside the handover area and insert the sample containers in empty sample container carriers. For example, if an emergency sample is placed inside the handover area, the control device checks, if an empty sample container carrier is available. If this is the case, the control device controls the handling device to insert the emergency sample container into an empty sample container carrier. If no empty sample container carrier is available, the control device controls the handling device such that the handling device removes a sample container having a lower priority value from a corresponding sample container carrier and inserts the emergency sample into the emptied sample container carrier.

According to an embodiment, the drive means are formed as electro-magnetic actuators being located in rows and columns below the transport surface and being controllable by the control device. The electro-magnetic actuators may comprise coils.

According to an embodiment, the sample container carriers respectively comprise a magnetically active device, e.g. a permanent magnet, for interaction with a magnetic field generated by the electromagnetic actuators such that a magnetic drive force is applied to the sample container carriers. The sample container carriers may be moved on the transport surface as a result of the magnetic drive force applied to the sample container carriers.

According to an embodiment, the transport surface comprises a storing region for storing unloaded sample containers. The storing region may be an area adjacent to the transport surface. A rack may be placed in the storing region. The unloaded sample containers may be stored in the rack placed in the storing region.

The laboratory automation system comprises a number (e.g. 2 to 50) of laboratory stations, preferably pre-analytical, analytical and/or post-analytical stations.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

The laboratory automation system further comprises a laboratory sample distribution system as described above being adapted to distribute the sample container carriers between the stations.

The invention will be described in detail with respect to the drawing schematically depicting embodiments of the invention. In detail:

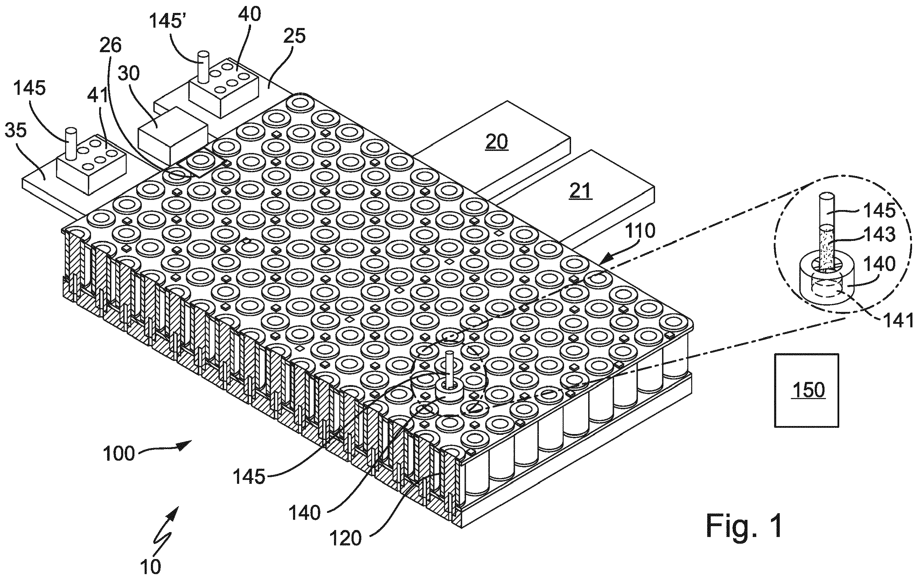

- Fig. 1: shows a laboratory automation system in a perspective view.

Fig. 1 depicts a laboratory automation system 10 in a perspective view. The laboratory automation system 10 comprises two exemplary laboratory stations 20 and 21. The laboratory automation system 10 further comprises a laboratory sample distribution system 100 comprising a transport surface 110. The laboratory stations 20 and 21 are arranged along an outline of the transport surface 110.

The transport surface 110 is adapted to carry a plurality of sample container carriers 140, wherein for the sake of explanation only a single sample container carrier 140 is depicted. Self-evidently typically a large number of sample container carriers 140 are arranged on the transport surface 110. The sample container carriers 140 each comprise a magnetically active device 141 in the form of a permanent magnet 141. The sample container carriers 140 carry sample containers 145 containing a respective sample 143 to be analyzed by at least one of the laboratory stations 20 and 21.

Drive means 120 in the form of electro-magnetic actuators are stationary arranged in rows and columns below the transport surface 110. The electro-magnetic actuators 120 are adapted to apply a magnetic drive force to the sample container carriers 140, such that sample container carriers 140 are distributed over the transport surface 110 on desired transport paths simultaneously and independent from one another, if necessary.

The laboratory sample distribution system 100 comprises a control device 150. The control device 150 is adapted to control or activate the electromagnetic actuators 120 such that the sample container carriers move 140 over the transport surface 110.

Respective priority values are assigned to the samples 143. The priority value is a number in the range between zero and ten, wherein the number ten indicates the highest priority and the number zero indicates the lowest priority. The priority value of a sample 143 may be determined based on a maximum turn-around-time assigned to the sample 143, and/or a number of laboratory stations needed for the analysis of the sample 143, and/or an elapsed processing time of the sample 143, and/or a static priority assigned to the sample 143. Further, the priority values may be determined by reading barcodes attached to the sample containers 145 comprising the samples 143 indicating the corresponding priority values.

The laboratory sample distribution system 100 further comprises a handover area 25. A rack 40 is placed on the handover area 25, wherein the rack 40 is adapted to store a certain number (e.g. 40-120) of laboratory sample containers 145. The number of laboratory sample containers 145 to be stored depends on the type of the rack 40.

The rack 40 placed on the handover area 25 comprises an emergency sample contained in a sample container 145'. The sample container 145' should be immediately inserted into a sample container carrier 140 and should be distributed by the laboratory sample distribution system 100 to a corresponding station 20, 21. The emergency sample contained in the sample container 145' has the highest available priority.

The control device 150 determines that no empty sample container carrier 140 is available. Consequently, the control device 150 controls the drive means 120 such that a sample container carrier 140 carrying a sample container 145 containing a sample 143 having a lower priority value than the emergency sample drives close to a handling device in form of a gripper 30.

The gripper 30 is adapted to handle sample containers 145, in particular to remove sample containers 145 from sample container carriers 140 and to insert sample containers 145 in sample container carriers 140. Typically, sample containers 145 are removed from and inserted into sample container carriers at an insertion position 26.

The gripper 30 is controlled by the control device 150 such, that the gripper 30 removes the sample container 145 from the sample container carrier 140. The removed sample container 145 is inserted in a rack 41 placed on a storing region 35. The storing region 35 may be part of the transport surface 110 or may be embodied separate from the transport surface 110. The gripper 30 is further controlled by the control device 150 such, that the gripper 30 inserts the sample container 145' comprising the emergency sample into the cleared or unloaded sample container carrier 140.

The unloaded sample container 145 is stored in the rack 41 until an empty sample container carrier 140 is available or the priority of the sample contained in the unloaded sample container 145 is higher than the priority of a sample contained in a sample container 145 being placed in a sample container carrier 140. In the latter case, the sample container 145 containing the sample having the lower priority value is removed from the sample container carrier 140 by the gripper 30 and the sample container 145 containing the sample having the higher priority value is inserted in the cleared sample container carrier 140.

## Claims

1. Method of operating a laboratory sample distribution system (100), wherein the laboratory sample distribution system (100) comprises:
- a transport surface (110),
- a number of sample containers (145) comprising samples (143) to be analyzed,
- a number of sample container carriers (140), wherein a respective sample container (145) is insertable into a sample container carrier (140),
- drive means (120) being adapted to move the sample container carriers (140) on the transport surface (110), and
- a control device (150) being configured to control the movement of the sample container carriers (140) on top of the transport surface (110) by driving the drive means (120) such that the sample container carriers (140) move along corresponding transport paths,
wherein the method comprises the steps:
- assigning priority values to the samples (143), and
- when a sample container (145) comprising a sample (143) is to be inserted into a sample container carrier (140) and no empty sample container carrier (140) is available,
- if a sample container carrier (140) carrying a sample container (145) is available, wherein the carried sample container (145) contains a sample (143) having an assigned priority value lower than the priority value assigned to the sample (143) contained in the sample container (145) to be inserted in a sample container carrier (140), unloading the sample container (145) comprising the sample (143) having the assigned lower priority value from the sample container carrier (140) and inserting the sample container (145) comprising the sample (143) having the assigned higher priority value into the empty sample container carrier (140).

2. Method according to claim 1, **characterized in that**
- the priority value of a respective sample (143) is determined based on
- a maximum turn-around-time assigned to the sample (143) contained in the sample container (145), and/or
- a number of laboratory stations (20, 21) needed for the analysis of the sample (143) contained in the sample container (145), and/or
- an elapsed processing time of the sample (143) contained in the sample container (145), and/or
- a static priority assigned to the sample (143) contained in the sample container (145).

3. Method according to claim 2, **characterized in that**
- if the static priority indicates an emergency sample (143), the highest available priority value is assigned to the emergency sample (143).

4. Method according to one of the preceding claims, **characterized in that**
- when a sample container (145) comprising a sample (143) is to be inserted into a sample container carrier (140) and an empty sample container carrier (140) is available,
- determining a first duration needed to move the empty sample container carrier (140) to an insertion position (26) on the transport surface (110), wherein sample containers (145) are inserted into sample container carriers (140) at the insertion position (26),
- determining a second duration needed to provide an emptied sample container carrier (140) currently carrying a sample container (145) at the insertion position (26), wherein the carried sample container (145) contains a sample (143) having an assigned priority value lower than the priority value assigned to the sample (143) contained in the sample container (145) to be inserted in a sample container carrier (140), and
- if the second duration is shorter than the first duration, unloading the sample container (145) comprising the sample (143) having the assigned lower priority value from the sample container carrier (140), moving the emptied sample container carrier (140) to the insertion position (26) and inserting the sample container (145) comprising the sample (143) having the assigned higher priority value into the emptied sample container carrier (140).

5. Laboratory sample distribution system (100), comprising
- a transport surface (110),
- a number of sample containers (145) comprising samples (143) to be analyzed,
- a number of sample container carriers (140), wherein a respective sample container (145) is insertable into a sample container carrier (140),
- drive means (120) being adapted to move the sample container carriers (140) on the transport surface (110), and
- a control device (150) being configured to control the movement of the sample container carriers (140) on top of the transport surface (110) by driving the drive means (120) such that the sample container carriers (140) move along corresponding transport paths,
**characterized in that**
- the control device (150) is further configured to perform a method according to one of the preceding claims.

6. Laboratory sample distribution system (100) according to claim 5, **characterized in that**
- the drive means (120) are formed as electro-magnetic actuators (120) being located below the transport surface (110) and being controllable by the control device (150), and
- the sample container carriers (140) each comprise a magnetically active device (141) for interaction with a magnetic field generated by the electro-magnetic actuators (120) such that a magnetic drive force is applied to the sample container carriers (140).

7. Laboratory sample distribution system (100) according to claim 5 or 6, **characterized in that**
- the transport surface (110) comprises a storing region (35) for storing unloaded sample containers (145).

8. Laboratory automation system (10), comprising
- a number of laboratory stations (20, 21), and
- a laboratory sample distribution system (100) according to one of the preceding claims 5 to 7.

9. Laboratory automation system (10) according to claim 8, **characterized in that**
- the number of laboratory stations (20, 21) comprise pre-analytical, analytical and/or post-analytical stations.
